# EUROPEAN PATENT SPECIFICATION

(11) **EP 2 253 937 B1**
(45) Date of publication and mention of the grant of the patent: **20.06.2012**
(21) Application number: 09006855.2
(22) Date of filing: 20.05.2009
(51) Int. Cl.: G01C 21/36, G08G 1/0969

(54) **Navigation system and method of providing emergency information in a navigation system**
Navigationssystem und Verfahren zur Bereitstellung von Notfallinformationen in einem Navigationssystem
Système de navigation et procédé pour fournir des informations d'urgence dans un système de navigation

(43) Date of publication of application: 24.11.2010
(73) Proprietor: Alpine Electronics, Inc., Tokyo (JP)
(72) Inventor: Wittig, Dirk, 70567 Stuttgart (DE)
(74) Representative: Klunker . Schmitt-Nilson . Hirsch

(56) References cited:
- EP-A- 1 383 098
- JP-A- 2004 205 349
- US-A1- 2004 215 377
- US-B1- 6 801 638

## Description

### Background of the Invention

### Field of the Invention

The present invention is directed to a navigation system for providing emergency information to a user when travelling through a tunnel Further, the invention is directed to a vehicle including such navigation system, and to a method of providing emergency information in a navigation system.

### Description of the Related Art

A commonly known navigation system detects the position of a user, in case that the navigation system is implemented in a vehicle, the position of a vehicle for performing vehicle route guidance. Generally, the current position of the vehicle is detected by using a navigation sensor in the vehicle, a receiver such as a GPS (Global Positioning System) receiver, and by map data corresponding to an area surrounding the detected position. For example, the map data is read from a recording medium such as a DVD. The navigation system displays a map image on a display screen and displays a mark indicating a current position of the vehicle superimposed at the predetermined position on the map image. Moreover, such a navigation system usually has route guidance function, wherein the navigation system can search for a route that leads from a start point or a current position to a destination which has previously been entered by the user of the navigation system.

When driving along a road, the situation may occur that the driver is driving through a tunnel in which dangerous situations may happen, for example in case of accidents. Particularly, accidents with fire and smoke emission in tunnels can be very dangerous, even in the situation in which the own car is not affected by the accident, as heat and smoke may spread rapidly through the tunnel.

Usually, tunnels are equipped with safety related installations such as emergency exits, fire extinguishers, and/or emergency telephones which people may use in an emergency. Such safety related installations are usually indicated in addition by corresponding signs distributed throughout the tunnel like direction signs to the next exit or emergency telephone etc.. However, the case may be that safety or security related installations or signs like direction signs to the next exit are hardly or almost not visible in case of smoke or panic inside a tunnel. On the other hand, drivers and passengers are often not aware or able to watch and recognize carefully the security installations and corresponding signs while driving into and through the tunnel so that drivers and passengers may not remember where the next emergency exit or emergency telephone is located in case of an emergency. The consequence may be that in an emergency people may act in panic since appropriate security information is not available and the special situation in a tunnel requires immediate decisions how to react in this particular situation.

In JP 2007-193650 A there is disclosed an evacuation guidance system for safety guiding and evacuating occupants when emergency occurs in a closed road, a tunnel, etc.. The evacuation guidance system comprises a roadside unit equipped with a transmission means to transmit information on a facility for emergency including location of the facility for emergency to a vehicle, on-vehicle equipment having a receiving means to receive facility information for emergency and storage means for on-vehicle equipment to store received facility information for emergency. A position detection means is for detecting the location of the vehicle, and a search instruction means is instructing to retrieve evacuation guidance information. Further, the system comprises a search means to search the facility for emergency from the facility information for emergency based on search instruction and the location of the vehicle and a notification means to notify the location of searched facility for emergency.

In JP 2008-096346 A there is disclosed a navigation device and method for guiding an evacuation route including a storage device storing map data containing tunnel information in which the position of emergency exit provided to each tunnel is associated. The navigation device further includes a means for calculating the current position, a display means for displaying an image that indicates the current position on a map by using the calculated current position and the map data. The display means displays evacuation route guidance that includes the data that indicates the current position and the distance, and the direction from the current position, to the emergency exit by using the current position and the tunnel data.

Document EP-A-1 383 098 discloses a navigation terminal with
- a camera adapted to capture images while moving,
- a GPS unit for calculating and monitoring a position while moving,
- a display and
- an analysing unit coupled for receiving image data of the camera.

The analysing unit analyses the images and when it detects a traffic sign in an image, this traffic sign is attributed to a location in a map and a corresponding symbol is displayed.

### Summary of the Invention

It is an object of the present invention to provide a navigation system and a method of providing emergency information in a navigation system which are appropriate for increasing safety while moving through a tunnel and which are appropriate for indicating emergency information to the user depending on the current circumstances while moving through the tunnel.

The invention is described to a navigation system and method according to claims 1 and 15.

According to a first aspect, there is provided a navigation system comprising a terminal coupleable with at least one camera which is adapted for capturing images while moving through a tunnel, an analysing unit coupled with the terminal for receiving data of the at least one camera, wherein the analysing unit analyses a respective one of the images and detects safety related features included in the images, and a position determination unit for calculating and monitoring a position while moving through the tunnel. The analysing unit is further adapted for allocating the detected safety related features to a respective corresponding monitored position and for matching the detected safety related features to map data. The navigation system further comprises an information providing unit which provides emergency information to be provided to a user based on the detected safety related features and the map data.

According to another aspect, a method of providing emergency information in a navigation system comprises the steps of moving through a tunnel, thereby capturing images of a real environment of the tunnel with at least one camera, analysing a respective one of the images and detecting safety related features included in the images, calculating and monitoring a position while moving through the tunnel and allocating the detected safety related features to a respective corresponding monitored position, receiving map data and matching the detected safety related features to the map data, and providing emergency information to be provided to a user based on the detected safety related features and the map data.

According to the above aspects, the invention may increase safety while moving through a tunnel while taking into account the special circumstances in the particular tunnel which the user moves through. This is accomplished by using at least one camera which captures images of the real environment of the tunnel while moving through the tunnel, so that images of the particular installations of the currently used tunnel are captured which permit to analyse the particular situation of the current tunnel with respect to its safety related installations. For example, while driving through a tunnel, the camera(s) may capture relevant safety related installations like emergency exits, connecting galleries between two tunnels or tunnel tubes, tunnel entrance or exit, SOS cut-outs, SOS telephones (emergency telephones), fire extinguishers, etc.. Further, the camera(s) may also capture safety related information on signs which indicates, e.g., distances to the above-mentioned installations, like next emergency exit, connecting galleries or tunnel exit/entrance, and may also capture other symbols, colours, or any other features which are indicative of safety related installations or equipment of the tunnel people may use in an emergency. Therefore, in the following, these items or parts thereof which may be captured by the camera(s) and detected by the analysing unit are generally referred to as safety related features, which are particularly indicative of any safety related or emergency installations or equipment of the tunnel.

With analysing a respective one of the images taken by the camera(s) while moving through the tunnel, such safety related features may be detected which are included in the images. For example, if one of the images shows an emergency exit or a sign indicating a distance to an emergency exit, this emergency exit or sign may be detected by the analysing unit by means of appropriate image recognition or image processing algorithms which are generally known in the art. Particularly, such image recognition or processing algorithm may use appropriate feature detection algorithms in order to search for features in the image which are indicative of any safety related installations, signs, symbols, or other features giving an indication to a corresponding safety related installation of the tunnel. While moving through the tunnel, a geographical position may be calculated and monitored. For example, if the navigation system is installed within a vehicle, a geographical position of the vehicle is calculated and monitored while moving through the tunnel. On the other hand, if the navigation system is implemented in a hand-held mobile device, such as a mobile telephone, the geographical position of the mobile device is calculated and monitored. Generally, a position associated with the navigation system or with the camera(s) is calculated and monitored while moving through the tunnel. When taking a respective one of the images, the corresponding geographical position is calculated and monitored so that the detected safety related features of a particular image may be allocated to a respective corresponding monitored geographical position. In this way, the navigation system knows the respective geographical position of the detected safety related features. By means of map data, for example received from a map data storage device, the detected safety related features may be matched to the map data according to their respective geographical position. As a result, the navigation system may provide emergency information to the user based on the map data and the matched safety related features, for example may indicate the distance between the current position of the navigation system and an emergency exit with the distance calculated using the map data, the current position and the position of the detected emergency exit.

In this way, the user is individually informed of the current circumstances within the tunnel, so that the user can immediately decide which direction to take for reaching an emergency exit or an emergency telephone, for example, so that the risk of acting in panic is reduced. Further, the user does not need to watch carefully and remember any safety related installations and signs while driving into and through the tunnel as this information can be easily retrieved from the navigation system. Further, according to the invention, up-to-date information may be provided to the user by means of capturing and analysing images of the current real environment of the tunnel so that the user is provided with emergency information regarding currently available safety related installations. For example, the case may be that, as a result of a construction in the tunnel, one of the emergency exits is currently not available. Such situations may be detected, e.g., in a situation in which the corresponding emergency exit sign is covered or otherwise not visible or designated as inactive.

According to an embodiment of the invention, the navigation system further comprises a map data processing unit which is adapted for processing map data received from a map data storing device and a position received from a position determination unit, wherein the map data processing unit is adapted to trigger the analysing unit for analysing the images upon monitoring a position which indicates an entrance into the tunnel. In other words, the analysing unit is activated when entering into a tunnel and may also be deactivated when exiting the tunnel. For example, the received map data may contain at least one attribute which is indicative of a tunnel wherein the analysing unit is triggered upon monitoring a position corresponding to map data containing the attribute. In other words, in the event that such tunnel attribute is processed by the map data processing unit corresponding to the current geographical position, the analysing unit may be activated for analysing the images of the camera.

According to another aspect of the invention, the information providing unit is coupleable to at least one of a display and loudspeaker for outputting the emergency information to a user. In a particular embodiment, the information providing unit is coupleable to a display for outputting the emergency information to a user, wherein the information providing unit is further adapted for generating a display image showing at least one depiction of a road through the tunnel which is augmented with the emergency information. In this way, the user can easily recognize the position of any safety related installations in the tunnel along the road.

According to a further embodiment, the information providing unit may be implemented in a way that, after passing at least one of the safety related features captured by the camera, the information providing unit augments the depiction of the road with corresponding emergency information. In this way, the display showing, for example, the map and the vehicle's current position on the currently used road may be completed with emergency information after having passed the corresponding safety related installations or signs so that the user may immediately get to know where any previous safety related installations are located.

According to a further embodiment of the invention, the information providing unit may be adapted to provide the emergency information in that graphical and/or acoustical indication is given to the user with respect to a distance and/or direction to a tunnel exit, tunnel entrance, emergency telephone, emergency exit, connecting gallery, SOS cut-out and/or fire extinguisher.

According to another embodiment of the invention, the navigation system may comprise at least one information button adapted for receiving user input by touching or actuating the information button. For example, the information button may be provided on a display which is designed as a touchscreen, wherein upon touching the corresponding area on the touchscreen which displays the information button the system detects corresponding user input indicating an actuation of the information button. Further, the information providing unit is coupleable to a display and/or a loudspeaker, wherein the information providing unit is adapted to provide, upon touching or actuating the information button, the emergency information to the display and/or the loudspeaker coupled to the information providing unit.

According to another embodiment of the invention, the navigation system may further comprise at least one triggering unit which detects at least one abnormal status of the navigation system or of a system in which the navigation system is implemented, wherein the triggering unit generates a triggering signal provided to the information providing unit upon detecting of an abnormal status. Upon receiving the triggering signal the information providing unit is adapted to provide the emergency information to a user. In this way, the emergency information can be provided to the user automatically if a dangerous situation occurs which may be the case when an abnormal status of the navigation system and/or of a vehicle is detected.

In a particular implementation, the triggering unit may be adapted to detect at least one abnormal status of a vehicle in which the navigation system is implemented, particularly is adapted to detect a vehicle halt with warning lights switched on or a vehicle accident. In order to implement this function, the triggering unit may be coupled with a speed sensor of the vehicle detecting a vehicle halt, and may also be coupled with a sensor detecting when the warning lights are switched on, which may be an indication of a dangerous situation, especially while moving through a tunnel. Further, the triggering unit may be coupled with a crash sensor or something similar which is capable of detecting a vehicle accident, for example a collision with another vehicle. In these cases, emergency information may be provided to the user automatically so that the user is immediately informed about any safety related installations in the tunnel.

According to another embodiment of the invention, the navigation system may further comprise a transmitting device adapted for transmitting detected safety related features and their respective position, or the emergency information, to a receiving device which is positioned externally to the navigation system, particularly externally to the vehicle in which the navigations system is installed. For example, the transmitting device may be designed as a transmitting device of a car-to-car communications system (so-called C2C communications system) or car-to-infrastructure communications system (so-called C2I communications system). Generally, the transmitting device may be designed as a transmitting device of a car-to-X communications system (so-called C2X communications system) for communicating with any device (device "X") external to the car. In this way, the gathered information regarding safety related features or the emergency information can be provided to other navigation systems, for example installed in other vehicles, so that the other navigation systems may be updated with corresponding information accordingly. For example, as soon as the vehicle exits a tunnel, the corresponding information may be transmitted to another car driving in the opposite direction and which is just before entering the tunnel in the opposite direction, so that the navigation system of this other car is already provided with corresponding safety related information when entering the tunnel. Further, if technically feasible, the information may also be transmitted to other cars while driving through the tunnel.

According to another embodiment, the navigation system further comprises a receiving device adapted for receiving externally provided safety related features and their respective position, or external emergency information, from a transmitting device which is positioned externally to the navigation system. The information providing unit is adapted to supplement or update the detected safety related features and the respective position, or the emergency information to be provided to the user, with the received externally provided safety related features and their respective position, or external emergency information, respectively. For example, the receiving device may be designed as a receiving device of a car-to-car communications system or a car-to-infrastructure communications system. In this way, the navigation system may be updated with safety related information from other cars or from a stationary transmitting device so that it is possible to provide safety related information already at the time of entering the tunnel. This safety related information may be updated and/or verified during driving through the tunnel upon analysing the images captured by the camera(s).

According to another embodiment of the invention, the map data storing device is adapted for providing map data including a plurality of links, wherein a respective link is connecting nodes at both of its ends, wherein at least one of the links is supplemented with at least one geographical coordinate having an attributed emergency information based on one of the detected safety related features and its allocated position.

Further embodiments of the invention may be taken from the dependent claims.

### Brief Description of the Drawings

The invention will now be explained in more detail by means of embodiments and accompanying drawings, in which
- Fig. 1: shows a schematic diagram illustrating an embodiment of a possible implementation of a navigation system according to the invention;
- Fig. 2: shows a schematic illustration of a road leading through a tunnel, wherein safety related installations and signs are monitored by vehicle camera(s);
- Fig. 3: shows schematic illustrations of exemplary safety related signs giving an indication to safety related installations in the tunnel,
- Fig. 4: shows schematic illustrations of exemplary images on a display screen providing emergency information and also of an exemplary acoustical emergency information;
- Fig. 5: shows a diagram illustrating an exemplary map data storage tech- nique;
- Fig. 6: shows a diagram illustrating an exemplary mesh of roads defined by link data.

### Description of Embodiments

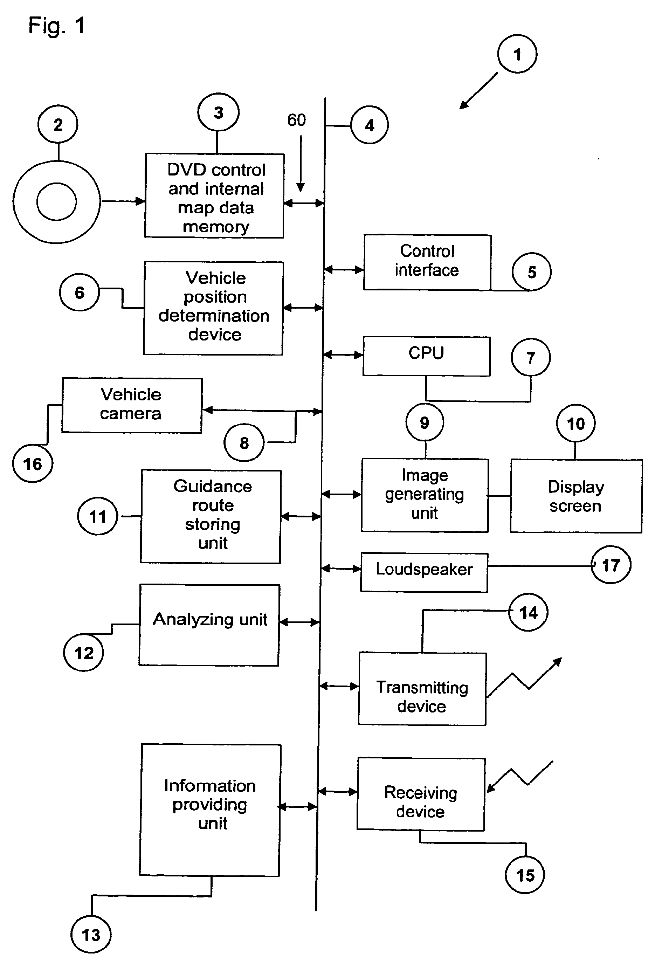

Fig. 1 is a schematic diagram illustrating an exemplary implementation of an embodiment of a navigation system 1 which may be implemented in a vehicle. The navigation system 1 includes a DVD control device 3 which may receive data from a recording medium 2 such as a DVD ROM or any other memory type device suitable for storing map data. For example, the recording medium 2 serves as a map storage medium for storing a digital map. The DVD control device 3 is for reading map data from the recording medium 2 and may include an internal map data storing device, such as a RAM memory or something similar, appropriate for temporarily or permanently storing map data read from the recording medium 2 within the navigation system 1. The navigation system 1 further includes a vehicle position determination device 6 for detecting a vehicle position. The vehicle position determination device 6 may have or may be coupled with a range sensor for generating a pulse every time the vehicle passes through a predetermined distance and/or a gyroscope for detecting any changes of moving direction, and a receiving unit such as a GPS receiving unit. The vehicle position determination device 6 may also include or may be coupled with a speed sensor for receiving a speed pulse signal, particularly in the event that the vehicle is moving through a tunnel and receiving of GPS signals with the GPS receiving unit is not possible. By means of the geographical position determined when entering the tunnel and the speed pulse, the vehicle position determination device 6 may determine a position within the tunnel while the vehicle moves through the tunnel, as is commonly known in the art. Furthermore, the navigation system 1 includes a guidance route storing unit 11 for storing information related to the searched guidance or navigation route to the destination which may be determined by the user. A control interface device 5 may be used as input device for entering inputs such as menu selection, map scrolling, search for a route to a destination, or something similar.

The navigation system 1 further includes a processor (CPU) 7 for controlling the overall operation of the navigation system in interaction with any stored programs. An image generating unit 9 is provided for generating a display image such as a map image based on map data 60 supplied from the DVD control and internal map data memory 3, wherein a display screen 10 is provided for displaying the map image. Information may also be provided to the user by means of a loudspeaker 17. Moreover, the navigation system 1 includes a transmitting device 14 which is particularly designed in the present embodiment as a transmitting device of a car-to-car communications system, but may be implemented in any car-to-X communications system. By means of the transmitting device 14, data may be transmitted in a wireless manner, for example, to another vehicle having a corresponding receiving device. Such type of receiving device is also implemented in the navigation system 1, wherein the receiving device 15 is particularly designed as a receiving device of a car-to-car communications system. As far as technically appropriate, the transmitting device 14 and receiving device 15 may also be used as parts of a car-to-infrastructure communications systems transmitting and receiving, respectively, data to and from a stationary device.

Moreover, the navigation system 1 includes an information providing unit 13 which is arranged for providing emergency information to the image generating unit 9 and/or loudspeaker 17 as set out in more detail below. Further, the navigation system comprises an analysing unit 12, the function of which is also set out in more detail below. All of the above-mentioned components implemented in the navigation system 1 are connected via a data bus 4 under the control of the CPU 7. The skilled person will also appreciate that some of the devices and units as described above may also be at least partially implemented in software under the control of the CPU 7.

Further, at least one camera 16 may be coupled via a terminal 8 with the data bus 4. For example, the camera 16 is a front or side camera of a vehicle which is disposed at the front or at one side of the vehicle for capturing images of a real environment next to the vehicle. Alternatively, the vehicle may comprise multiple cameras 16, for example one front camera and two side cameras on the left and right hand side of the vehicle, respectively, for capturing images of the real environment in front of and laterally to the vehicle. In an embodiment, the camera or cameras 16 may be coupled to the terminal 8 of the data bus 4 by means of a vehicle data communication bus which may also be used for other electronic devices of the vehicle which are interconnected with each other.

The skilled person will appreciate that the implementation of a navigation system 1 as shown in Fig. 1 is only an exemplary implementation out of a plurality of possible implementations. Generally, the navigation system according to the invention may be, in principle, any type of navigation system capable of providing guiding information to the user and having a terminal which may be coupled with a camera or with multiple cameras for the purposes of image feature recognition.

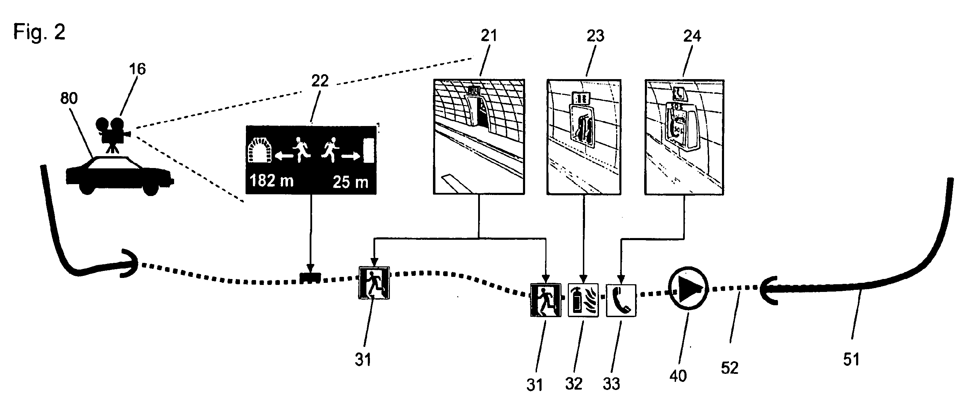

In the following, a functionality and embodiments of the navigation system according to the invention will be described in more detail with reference to Figs. 2 to 6.

In Fig. 2, a schematic illustration of a road 51 which leads through a tunnel 52 is shown, wherein a vehicle 80 travels along the road 51 and through the tunnel 52. The exemplary tunnel 52 is equipped with safety related installations and equipment such as emergency exits 21, fire extinguishers 23, SOS-stations 24 including an emergency telephone and signs 22 which indicate distances to safety related installations, such as sign 22 as shown in Fig. 2 which indicates a distance of 182m to the next emergency exit and a distance of 25m to the tunnel exit.

While moving through the tunnel 52, the camera or cameras 16 of the vehicle 80 are capturing images of the real environment of the tunnel, particularly of the lateral real environment as it is passing by when moving through the tunnel. The analysing unit 12 of the navigation system 1 is coupled through the terminal 8 with the vehicle camera(s) 16 and receives the captured images for analysing a respective one of the images with respect to any safety related features included in the images. For example, the analysing unit 12 may be implemented using a feature detection algorithm analysing a respective one of the images with respect to features which are indicative of any safety related installation in the tunnel. For example, if emergency exits and signs for indicating emergency exits are coloured in green colour as it is common for example in Germany, the feature detection algorithm may search for any features showing green colour and may additionally search for any further features which are indicative of an emergency exit such as a running man as depicted on the sign 22. While moving through the tunnel, a geographical position of the vehicle is calculated and monitored by the vehicle position determination device 6. In the event that any safety related feature has been detected by the analysing unit 12, a respective corresponding monitored geographical position when taking the corresponding image is allocated to the particular detected safety related feature, so that the navigation system 1 knows the geographical position of the respective safety related feature. For example, each time the camera(s) 16 is/are taking a picture of the real environment, a corresponding geographical position is monitored and allocated to the respective image so that in the event that a safety related feature in that particular image is detected, this particular safety related feature may be allocated to the respective geographical location.

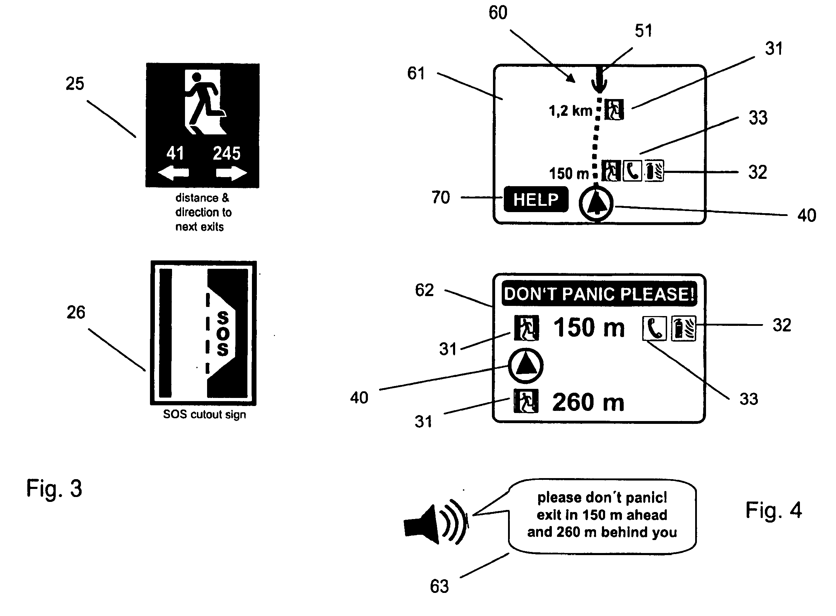

Particularly, the analysing unit 12 analyses any images received from the camera(s) 16 with respect to at least one of the following: A sign indicating an emergency exit or an emergency exit itself, such as emergency exit 21 as shown in Fig. 2, a sign indicating an emergency telephone, such as sign 24 as shown in Fig. 2, a sign indicating a tunnel exit or entrance or connecting gallery, a sign indicating a distance and/or direction to an emergency exit, such as sign 22 shown in Fig. 2 and sign 25 shown in Fig. 3. Further, the analysing unit 12 may analyse the image with respect to an emergency telephone, tunnel exit, tunnel entrance, connecting gallery, an SOS cut-out, a sign indicating an SOS cut-out, such as sign 26 as shown in Fig. 3, a fire extinguisher and a sign indicating a fire extinguisher, such as sign 23 shown in Fig. 2. The analysing unit 12 further receives map data 60 from the DVD control and internal map data memory 3 for matching the detected safety related features to the map data. Particularly, as the geographical position for each of the detected safety related features has been monitored and allocated, the corresponding safety related installations of the tunnel and their respective positions may be matched to the map data, particularly to the road network.

For providing emergency information to the user, the information providing unit 13 generates a display image such as display image 61 according to Fig. 4 showing a depiction of a road through the tunnel 52 which is augmented with corresponding emergency information. The emergency information may comprise letters, numbers, text and/or symbols, such as symbols 31 to 33 shown in Figures 2 and 4, which are indicative of a respective safety related installation or equipment of the tunnel people may use in an emergency. For example, symbol 31 is indicative of an emergency exit, symbol 32 is indicative of a fire extinguisher, and symbol 33 is indicative of an emergency telephone. The respective symbols are preferably depicted in a position corresponding to the respective geographical position of the installations within the tunnel, wherein advantageously the distance between the vehicle's current position 40 and the respective safety related installation is also depicted in the display image, such as shown in images 61 and 62. As shown in the image 61, the next emergency exit from the vehicle position 40 is in 150m, whereas the second emergency exit in front of the vehicle's position is in 1.2 km.

As shown in another image 62, the corresponding emergency information may also be shown to the user in a different simple manner indicating only the distances to the next emergency exits. For example, the analysing unit 12 has detected that the next emergency exit in front of the vehicle's position is in 150m and is also installed with an emergency telephone and a fire extinguisher, whereas the next emergency exit behind the vehicle's current position is in 260m. For example, this information has been taken from a corresponding sign, such as sign 22 as shown in Fig. 2, depicting the next emergency exit in front of and behind the position of the sign. Additionally, or alternatively, the corresponding emergency information may also be provided to the user by means of an acoustical information 63 as shown in Fig. 4 which announces the distances and directions of the next exits in acoustical manner.

The emergency information may be provided in a way that after having passed the installation or the corresponding signs in the tunnel, the map or highway mode screen or something similar is completed with corresponding indications to the safety related installations so that the user always knows where the previous installations are located. Further, the navigation system may also calculate the distance between the current vehicle's position and an emergency exit or any other safety related installation, and may also provide guiding function to the user, for example by indicating a distance and direction to the user how to reach this safety related installation.

According to an embodiment of the invention, at least one information button may be provided, such as information button 70 as shown on the image 61 in Fig. 4. Particularly, the display 10 which is showing the image 61 is designed as a touchscreen, wherein the information button 70 may be actuated upon touching the corresponding area of the display screen in which the information button 70 is shown. Upon touching or actuating the information button 70, the information providing unit 13 provides emergency information to the user. Particularly, upon touching or actuating the information button 70, the image 61 shown on display screen 10 may switch to the image 62 so as to show the next emergency exits and the respective directions and distances in big letters and numbers so that the user is enabled in an emergency situation to gather the most important information at one glance. Simultaneously or alternatively, the emergency information may be provided through the loudspeaker 17 with a message 63 as shown in Fig. 4. Therefore, in case of an emergency, the user can touch or actuate or press the information button 70 to trigger a particular human machine interface which is adapted to provide emergency information to the user in a simple and most appropriate way.

According to an embodiment, the emergency information may also be provided to the user automatically triggered by at least one triggering unit which detects at least one abnormal status of the navigation system or of a system in which the navigation system is implemented. For example, the CPU 7 may detect from a crash sensor coupled to the bus 4 that the vehicle 80 is involved in an accident, so that upon detecting of this abnormal status of the vehicle 80 a corresponding triggering signal is generated and provided to the information providing unit 13 which in turn provides appropriate emergency information to the display 10 and/or loudspeaker 17. The CPU 7 may also detect a vehicle halt from a speed sensor in combination with warning lights switched on, which may also generate the triggering signal provided to the information providing unit 13.

According to an embodiment, the analysing unit 12 may be triggered for analysing any images received from the camera(s) 16 upon monitoring a geographical position which indicates an entrance into the tunnel. For example, the CPU 7 processes map data received from DVD control and internal map data memory 3 and also processes a geographical position received from the position determination device 6. For example, if the CPU 7 processes map data which contain an attribute which is indicative of a tunnel, the analysing unit 12 may be triggered for analysing any images in the event that a geographical position is monitored which corresponds to map data containing the tunnel attribute.

In an embodiment of the invention, the transmitting device 14 transmits the detected safety related features and their respective geographical position to a receiving device which is positioned externally to the navigation system 1, for example is positioned in another car. In this way, the information gathered while driving through the tunnel can be provided to other cars which will receive this information and may process this information at their end. Additionally or alternatively, the transmitting device 14 may also transmit the emergency information itself, such as the output of the information providing unit 13, to another car which may process this information at its end.

Similarly, the receiving device 15 may receive externally provided safety related features and their respective geographical position from a transmitting device which is positioned externally to the navigation system 1. In this case, the information providing unit 13 may supplement or update the previously detected safety related features and their respective geographical position with the received externally provided safety related features and their respective geographical position. For example, a time stamp may be implemented for updating the previous information only in case that a predetermined time has elapsed. In this way, the navigation system 1 may be provided with safety related information when entering into a tunnel so that corresponding emergency information is already available at the time of entering the tunnel. Analogously to the transmitting device 14, the receiving device 15 may also receive additionally or alternatively external emergency information which may be directly processed in the information providing unit 13.

Generally, in the analysing process performed in the analysing unit 12 for analysing the images provided by the camera(s) 16, any type of image recognition or processing technologies which is appropriate for extracting significant features of safety related installations, signs, or symbols, may be used. Likewise, in the process of matching the detected safety related features and their respective geographical positions to the map data any commonly known processes or algorithms may be used which are appropriate for matching different sets of data with each other.

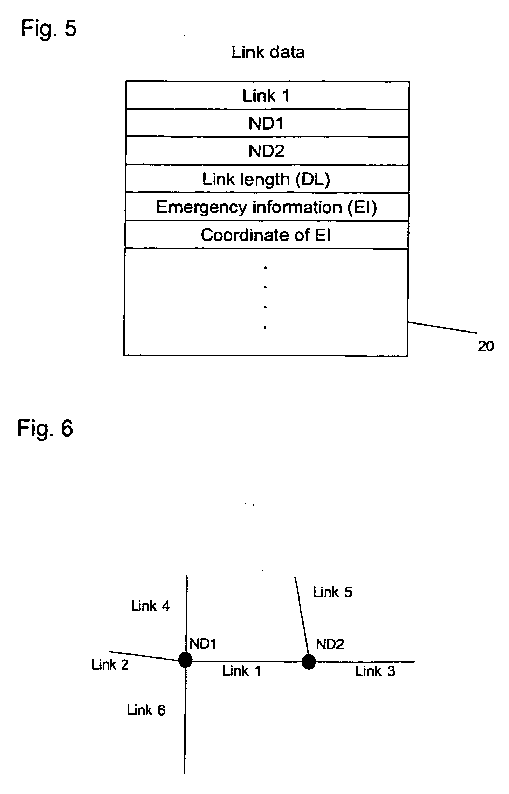

Fig. 5 depicts a diagram illustrating an exemplary map data storage technique which may be used in connection with the present invention. The map data provided from the recording medium 2 according to Fig. 1 includes a plurality of links, wherein a respective link is connecting nodes at both of its ends. In this way, a portion of a road connecting two nodes is represented by a link. A node may be in principle any geographic point of interest, for example an intersection in a traffic or road network. Each link stored in the database has associated information for characterising the respective link. According to Fig. 5, an example is depicted for a link denoted as Link 1. The associated information 20 for Link 1 (link data) as shown in Fig. 5 contains the nodes ND1, ND2 at a respective end of the link, the link length DL, at least one geographic coordinate which has an attributed emergency information based on at least one of the detected safety related features and its allocated geographical position. If necessary, any further information associated with the respective link may also be part of the information 20, such as functional class, speed limit, tunnel information (attribute), or something similar. Fig. 6 depicts a diagram illustrating an exemplary mesh of roads defined by link data of a plurality of links. The mesh according to Fig. 6 includes the Link 1 of Fig. 5 connecting the nodes ND1 and ND2 at both of its ends. Further, the mesh of road includes an exemplary number of links denoted as Link 1 to Link 6.

While the invention has been described with reference to exemplary embodiments, it will be understood by those skilled in the art that various changes may be made without departing from the scope of the claims. Therefore, it is intended that the invention not be limited to the particular embodiments disclosed, but that the invention will include all embodiments falling within the scope of the appended claims.

## Claims

1. A navigation system (1), comprising
- a terminal (8) coupleable with at least one camera (16) which is adapted for capturing images while moving through a tunnel (52),
- an analyzing unit (12) coupled with the terminal (8) for receiving data of the at least one camera, wherein the analyzing unit (12) analyses a respective one of the images and detects safety related features (21 - 24) included in the images, which are indicative of any safety related installation or equipment of a tunnel,
- a position determination unit (6) for calculating and monitoring a position while moving through the tunnel (52),
- wherein the analyzing unit (12) is further adapted for allocating the detected safety related features (21 - 24) to a respective corresponding monitored position and for matching the detected safety related features to map data (60),
- an information providing unit (13) which provides emergency information (31 - 33) informing of current circumstances within the tunnel, to be provided to a user based on the detected safety related features and the map data.

2. The navigation system of claim 1, further comprising
- a map data processing unit (7) which is adapted for processing map data received from a map data storing device (3) and a position received from the position determination unit (6),
- wherein the map data processing unit (7) is adapted to trigger the analyzing unit (12) for analysing the images upon monitoring a position which indicates an entrance into the tunnel.

3. The navigation system of claim 1 or 2, wherein
for detecting safety related features (21 - 24) included in the images the analyzing unit (12) analyses the respective image with respect to at least one of the following: a sign (21) indicating an emergency exit; a sign (24) indicating an emergency telephone; a sign indicating a tunnel exit or entrance; a sign indicating a connecting gallery; a sign (22, 25) indicating a distance and/or direction to an emergency exit, emergency telephone, tunnel exit, tunnel entrance or connecting gallery; an emergency exit; an SOS cutout; a fire extinguisher; a connecting gallery; a sign (26) indicating an SOS cutout; a sign (23) indicating a fire extinguisher.

4. The navigation system of one of claims 1 to 3, wherein
the information providing unit (13) is coupleable to at least one of a display (10) and loudspeaker (17) for outputting the emergency information to a user.

5. The navigation system of one of claims 1 to 4, wherein
the information providing unit (13) is coupleable to a display (10) for outputting the emergency information to a user, wherein the information providing unit is adapted for generating a display image (61) showing at least one depiction of a road (51) through the tunnel which is augmented with the emergency information (31- 33).

6. The navigation system of claim 5, wherein
after passing at least one of the safety related features (21 - 24) captured by the camera the information providing unit (13) augments the depiction of the road (51) with corresponding emergency information (31 - 33).

7. The navigation system of one of claims 1 to 6, further comprising
- at least one information button (70) adapted for receiving user input by touching or actuating the information button,
- wherein the information providing unit (13) is coupleable to a display (10) and/or a loudspeaker (17),
- wherein the information providing unit (13) is adapted to provide upon touching or actuating the information button (70) the emergency information (31 - 33) to the display (10) and/or the loudspeaker (17).

8. The navigation system of one of claims 1 to 7, further comprising
- at least one triggering unit (6, 7) which detects at least one abnormal status of the navigation system (1) or of a system (80) in which the navigation system (1) is implemented, wherein the triggering unit generates a triggering signal provided to the information providing unit (13) upon detecting of an abnormal status,
- wherein upon receiving the triggering signal the information providing unit (13) is adapted to provide the emergency information (31 - 33) to a user.

9. The navigation unit of claim 8, wherein
the triggering unit (6, 7) is adapted to detect at least one abnormal status of a vehicle (80) in which the navigation system (1) is implemented, particularly is adapted to detect a vehicle halt with warning lights switched on or a vehicle accident.

10. The navigation system of one of claims 1 to 9, wherein
the information providing unit (13) is adapted to provide the emergency information (31 - 33) in that graphical and/or acoustical indication is given to the user with respect to a distance and/or direction to a tunnel exit, tunnel entrance, emergency telephone, emergency exit, connecting gallery, SOS cutout, and/or fire extinguisher.

11. The navigation system of one of claims 1 to 10, further comprising
a transmitting device (14) adapted for transmitting the detected safety related features and their respective position or the emergency information to a receiving device which is positioned externally to the navigation system (1), the transmitting device particularly designed as a transmitting device of a car-to-X communications system.

12. The navigation system of one of claims 1 to 11, further comprising
a receiving device (15) adapted for receiving externally provided safety related features and their respective position or external emergency information from a transmitting device which is positioned externally to the navigation system (1), wherein the information providing unit is adapted to supplement or update the detected safety related features and their respective position or emergency information to be provided to the user with the received externally provided safety related features and their respective position or external emergency information, the receiving device particularly designed as a receiving device of a car-to-X communications system.

13. The navigation system of one of claims 1 to 12, further including
- a map data storing device (2, 3) which is adapted for providing map data including a plurality of links (Link), wherein a respective link (Link 1) is connecting nodes (ND1, ND2) at both of its ends,
- wherein at least one of the links (Link 1) is supplemented with at least one geographical coordinate having an attributed emergency information based on one of the detected safety related features (21 - 24) and its allocated position.

14. A vehicle (80) including a navigation system (1) according to one of the preceding claims.

15. A method of providing emergency information in a navigation system, comprising the following steps:
- moving through a tunnel (52), thereby
- capturing images of a real environment of the tunnel with at least one camera (16),
- analysing a respective one of the images and detecting safety related features (21 - 24) included in the images, which are indicative of any safety related installation or equipment of a tunnel,
- calculating and monitoring a position while moving through the tunnel and allocating the detected safety related features (21 - 24) to a respective corresponding monitored position,
- receiving map data (60) and matching the detected safety related features (21 - 24) to the map data,
- providing emergency information (31 - 33) informing of current circumstances within the tunnel, to be provided to a user based on the detected safety related features and the map data.

## Patentansprüche

1. Navigationssystem, aufweisend:
- einen Anschluss (8), der mit wenigstens einer Kamera (16) koppelbar ist, welche angepasst ist, Bilder während einer Bewegung durch ein Tunnel (52) aufzunehmen,
- eine Analyseeinheit (12), die mit dem Anschluss (8) zum Empfangen von Daten der wenigstens einen Kamera gekoppelt ist, wobei die Analyseeinheit (12) ein jeweiliges der Bilder analysiert und sicherheitsbezogene Merkmale (21-24), die in den Bildern enthalten sind, detektiert, welche für eine sicherheitsbezogene Installation oder Ausrüstung eines Tunnels bezeichnend sind,
- eine Positionsbestimmungseinheit (6) zur Berechnung und zum Aufzeichnen einer Position während einer Bewegung durch das Tunnel (52),
- wobei die Analyseeinheit (12) weiterhin angepasst ist, die detektierten sicherheitsbezogenen Merkmale (21-24) zu einer jeweiligen, korrespondierenden aufgezeichneten Position zuzuordnen und die detektierten sicherheitsbezogenen Merkmale mit Kartendaten (60) abzugleichen,
- eine Informationsbereitstellungseinheit (13), welche Notfallinformation (31-33) bereitstellt, welche über augenblickliche Umstände innerhalb des Tunnels informiert und welche an einen Benutzer basierend auf den detektierten sicherheitsbezogenen Merkmalen und den Kartendaten bereitzustellen ist.

2. Navigationssystem nach Anspruch 1, weiterhin aufweisend:
- eine Kartendatenverarbeitungseinheit (7), welche angepasst ist, von einer Kartendatenspeicherungsvorrichtung (3) empfangene Kartendaten und eine von der Positionsbestimmungseinheit (6) empfangene Position zu verarbeiten,
- wobei die Kartendatenverarbeitungseinheit (7) angepasst ist, die Analyseeinheit (12) zur Analyse der Bilder auf ein Feststellen einer Position hin auszulösen, welche einen Eingang in das Tunnel anzeigt.

3. Navgationssystem nach Anspruch 1 oder 2, wobei zur Detektion von sicherheitsbezogenen Merkmalen (21-24), die in den Bildern enthalten sind, die Analyseeinheit (12) das jeweilige Bild mit Bezug auf wenigstens eines der Folgenden analysiert: ein Zeichen (21), welches einen Notausgang anzeigt; ein Zeichen (24), welches ein Notfalltelefon anzeigt; ein Zeichen, welches einen Tunnelausgang oder -eingang anzeigt; ein Zeichen, welches einen Verbindungsgang anzeigt; ein Zeichen (22, 25), welches eine Entfernung und/oder eine Richtung zu einem Notausgang, Notfalltelefon, Tunnelausgang, Tunneleingang oder Verbindungsgang anzeigt; einen Notausgang; eine SOS-Haltebucht; einen Feuerlöscher; einen Verbindungsgang; ein Zeichen (26), welches eine SOS-Haltebucht anzeigt; ein Zeichen (23), welches einen Feuerlöscher anzeigt.

4. Navigationssystem nach einem der Ansprüche 1 bis 3, wobei die Informationsbereitstellungseinheit (13) mit wenigstens einem Display (10) und/oder Lautsprecher (17) zur Ausgabe der Notfallinformation an den Benutzer koppelbar ist.

5. Navigationssystem nach einem der Ansprüche 1 bis 4, wobei die Informationsbereitstellungseinheit (13) mit einem Display (10) zur Ausgabe der Notfallinformation an einen Benutzer koppelbar ist, wobei die Informationsbereitstellungseinheit zur Erzeugung eines Darstellungsbilds (61) angepasst ist, welches wenigstens eine Darstellung einer Straße (51) durch das Tunnel darstellt, welche mit der Notfallinformation (31-33) angereichert ist.

6. Navigationssystem nach Anspruch 5, wobei nach einem Passieren wenigstens eines der sicherheitsbezogenen Merkmale (21-24), die durch die Kamera erfasst wurden, die Informationsbereitstellungseinheit (13) die Darstellung der Straße (51) mit entsprechender Notfallinformation (31-33) anreichert.

7. Navgationssystem nach einem der Ansprüche 1 bis 6, weiterhin aufweisend:
- wenigstens eine Informationsschaltfläche (70), die angepasst ist, eine Benutzereingabe durch Berührung oder Betätigung der Informationsschaltfläche zu empfangen,
- wobei die Informationsbereitstellungseinheit (13) mit einem Display (10) und/oder einem Lautsprecher (16) koppelbar ist,
- wobei die Informationsbereitstellungseinheit (13) angepasst ist, auf eine Berührung oder Betätigung der Informationsschaltfläche (70) die Notfallinformation (31-33) an das Display (10) und/oder den Lautsprecher (17) bereitzustellen.

8. Navigationssystem nach einem der Ansprüche 1 bis 7, weiterhin aufweisend:
- wenigstens eine Auslöseeinheit (6, 7), welche wenigstens einen abnormalen Status des Navigationssystems (1) oder eines Systems (80), in welchem das Navigationssystem (1) implementiert ist, detektiert, wobei die Auslöseeinheit ein Auslösesignal generiert, das an die Informationsbereitstellungseinheit (13) auf ein Detektieren eines abnormalen Status hin bereitgestellt wird,
- wobei auf ein Empfangen des Auslösesignals hin die Informationsbereitstellungseinheit (13) angepasst ist, die Notfallinformation (31-33) an einen Benutzer bereitzustellen.

9. Navigationssystem nach Anspruch 8, wobei die Auslöseeinheit (6, 7) angepasst ist, wenigstens einen abnormalen Status eines Fahrzeugs (80), in welchem das Navigationssystem (1) implementiert ist, zu detektieren, insbesondere angepasst ist, einen Fahrzeughalt mit eingeschalteter Warnblinkanlage oder einen Fahrzeugunfall zu detektieren.

10. Navigationssystem nach einem der Ansprüche 1 bis 9, wobei die Informationsbereitstellungseinheit (13) angepasst ist, die Notfallinformation (31-33) in einer Weise bereitzustellen, dass eine graphische und/oder akkustische Anzeige an den Benutzer mit Bezug auf eine Entfernung und/oder eine Richtung zu einem Tunnelausgang, Tunneleingang, Notfalltelefon, Notfallausgang, Verbindungsgang, SOS-Haltebucht, und/oder Feuerlöscher gegeben wird.

11. Navigationssystem nach einem der Ansprüche 1 bis 10, weiterhin aufweisend eine Übertragungsvorrichtung (14), die angepasst ist, die festgestellten sicherheitsbezogenen Merkmale und ihre jeweilige Position oder die Notfallinformation an eine Empfangsvorrichtung zu übertragen, welche außerhalb des Navigationssystems (1) positioniert ist, wobei insbesondere die Übertragungsvorrichtung als eine Übertragungsvorrichtung eines Car-to-X-Kommunikationssystems ausgebildet ist.

12. Navigationssystem nach einem der Ansprüche 1 bis 11, weiterhin aufweisend eine Empfangsvorrichtung (15), die angepasst ist, von extern bereitgestellt sicherheitsbezogene Merkmale und ihre jeweilige Position oder externe Notfallinformation von einer Übertragungsvorrichtung zu empfangen, welche außerhalb des Navigationssystems (1) positioniert ist, wobei die Informationsbereitstellungseinheit angepasst ist, die detektierten sicherheitsbezogenen Merkmale und ihre jeweilige Position oder die Notfallinformation, die an den Benutzer bereitzustellen sind, mit den empfangenen, von extern bereitgestellten sicherheitsbezogenen Merkmalen und ihrer jeweiligen Position oder der externen Notfallinformation zu ergänzen oder zu aktualisieren, wobei die Empfangsvorrichtung insbesondere als eine Empfangsvorrichtung eines Car-to-X-Kommunikationssystems ausgebildet ist.

13. Navigationssystem nach einem der Ansprüche 1 bis 12, weiterhin beinhaltend:
- eine Kartendatenspeicherungsvorrichtung (2, 3), welche angepasst ist, Kartendaten mit einer Mehrzahl von Links (Link) bereitzustellen, wobei ein jeweiliger Link (Link 1) Knoten (ND1, ND2) an beiden seiner Enden verbindet,
- wobei wenigstens einer der Links (Link 1) mit wenigstens einer geographischen Koordinate ergänzt wird, die eine zugeordnete Notfallinformation basierend auf einer der detektierten sicherheitsbezogenen Merkmale (21-24) und seiner zugeordneten Position hat.

14. Fahrzeug (80) mit einem Navigationssystem (1) gemäß einem der vorhergehenden Ansprüche.

15. Verfahren zur Bereitstellung von Notfallinformation in einem Navigationssystem, aufweisend die folgenden Schritte:
- Bewegung durch ein Tunnel (52), wobei dabei
- Bilder einer realen Umgebung des Tunnels mit wenigstens einer Kamera (16) aufgenommen werden,
- ein jeweiliges der Bilder analysiert wird und sicherheitsbezogene Merkmale (21-24), die in den Bildern enthalten sind, und welche für sicherheitsbezogene Installation oder Ausrüstung in einem Tunnel bezeichnend sind, festgestellt werden,
- Berechnen und Aufzeichnen einer Position während einer Bewegung durch das Tunnel und Zuordnen der detektierten sicherheitsbezogenen Merkmale (21-24) zu einer jeweiligen entsprechenden aufgezeichneten Position,
- Empfangen von Kartendaten (60) und Abgleich der detektierten sicherheitsbezogenen Merkmale (21-24) mit den Kartendaten,
- Bereitstellung von Notfallinformation (31-33), welche über gegenwärtige Umstände innerhalb des Tunnels informiert, und welche an einen Benutzer basierend auf den detektierten sicherheitsbezogenen Merkmalen und den Kartendaten bereitzustellen ist.

## Revendications

1. Système de navigation (1) comprenant :
- un terminal (8) pouvant être couplé à au moins une caméra (16) qui est adaptée pour capturer des images pendant le déplacement dans un tunnel (52),
- une unité d'analyse (12) couplée au terminal (8) pour recevoir des données de ladite au moins une caméra, dans lequel l'unité d'analyse (12) analyse une image respective parmi lesdites images et détecte des éléments liés à la sécurité (21 - 24) inclus dans les images, qui indiquent toute installation ou équipement lié(e) à la sécurité d'un tunnel,
- une unité de détermination de position (6) pour calculer et surveiller une position pendant le déplacement dans le tunnel (52),
- dans lequel l'unité d'analyse (12) est en outre adaptée pour allouer les éléments liés à la sécurité détectés (21 - 24) à une position surveillée correspondante respective et pour associer les éléments liés à la sécurité détectés à des données de carte (60),
- une unité fournissant des informations (13) qui fournit des informations de secours (31 - 33) informant sur les circonstances courantes à l'intérieur du tunnel, destinées à être fournies à un utilisateur en se basant sur les éléments liés à la sécurité détectés et sur les données de carte.

2. Système de navigation selon la revendication 1, comprenant en outre :
- une unité de traitement de données de carte (7) qui est adaptée pour traiter des données de carte fournies par un dispositif de stockage de données de carte (3) et une position fournie par l'unité de détermination de position (6),
- dans lequel l'unité de traitement de données de carte (7) est adaptée pour déclencher l'unité d'analyse (12) pour analyser les images lors de la surveillance d'une position qui indique une entrée dans le tunnel.

3. Système de navigation selon la revendication 1 ou 2, dans lequel, pour détecter des éléments liés à la sécurité (21 - 24) inclus dans les images, l'unité d'analyse (12) analyse l'image respective relativement à au moins l'un des objets suivants : un panneau (21) indiquant une issue de secours ; un panneau (24) indiquant un téléphone de secours ; un panneau indiquant une sortie ou une entrée du tunnel ; un panneau indiquant une galerie de communication ; un panneau (22, 25) indiquant une distance et/ou une direction vers une sortie de secours, un téléphone de secours, une sortie de tunnel, une entrée de tunnel ou une galerie de communication ; une sortie de secours ; un refuge d'urgence ; un extincteur ; une galerie de communication ; un panneau (26) indiquant un refuge d'urgence ; un panneau (23) indiquant un extincteur.

4. Système de navigation selon l'une des revendications 1 à 3, dans lequel l'unité fournissant des informations (13) peut être couplée à au moins un appareil parmi un écran (10) et un haut-parleur (17) pour fournir les informations de secours à un utilisateur.

5. Système de navigation selon l'une des revendications 1 à 4, dans lequel l'unité fournissant des informations (13) peut être couplée à un écran (10) pour fournir les informations de secours à un utilisateur, dans lequel l'unité fournissant des informations est adaptée pour générer une image d'affichage (61) montrant au moins une représentation d'une route (51) qui passe dans le tunnel à laquelle sont ajoutées les informations de secours (31 - 33).

6. Système de navigation selon la revendication 5, dans lequel, après être passé devant au moins l'un des éléments liés à la sécurité (21 - 24) capturés par la caméra, l'unité fournissant des informations (13) ajoute à la représentation de la route (51) des informations de secours correspondantes (31 - 33).

7. Système de navigation selon l'une des revendications 1 à 6, comprenant en outre
- au moins un bouton d'information (70) adapté pour recevoir une entrée d'utilisateur par un contact ou un actionnement du bouton d'information,
- dans lequel l'unité fournissant des informations (13) peut être couplée à un écran (10) et/ou à un haut-parleur (17),
- dans lequel l'unité fournissant des informations (13) est adaptée pour fournir, après un contact ou un actionnement du bouton d'information (70), les informations de secours (31 - 33) à l'écran (10) et/ou au haut-parleur (17).

8. Système de navigation selon l'une des revendications 1 à 7, comprenant en outre :
- au moins une unité de déclenchement (6, 7) qui détecte au moins un état anormal du système de navigation (1) ou d'un système (80) dans lequel le système de navigation (1) est mis en oeuvre, dans lequel l'unité de déclenchement génère un signal de déclenchement fourni à l'unité fournissant des informations (13) lors de la détection d'un état anormal,
- dans lequel, après avoir reçu le signal de déclenchement, l'unité fournissant des informations (1-3) est adaptée pour fournir les informations de secours (31 - 33) à un utilisateur.

9. Système de navigation selon la revendication 8, dans lequel l'unité de déclenchement (6, 7) est adaptée pour détecter au moins un état anormal d'un véhicule (80) dans lequel le système de navigation (1) est mis en oeuvre, et en particulier est adaptée pour détecter un arrêt du véhicule avec les feux de détresse allumés ou un accident de véhicule.

10. Système de navigation selon l'une des revendications 1 à 9, dans lequel l'unité fournissant des informations (13) est adaptée pour fournir les informations de secours (31 - 33) dans lesquelles une indication graphique et/ou acoustique est donnée à l'utilisateur concernant une distance et/ou une direction vers une sortie de tunnel, une entrée de tunnel, un téléphone de secours, une sortie de secours, une galerie de communication, un refuge d'urgence et/ou un extincteur.

11. Système de navigation selon l'une des revendications 1 à 10, comprenant en outre un dispositif émetteur (14) adapté pour transmettre les éléments liés à la sécurité détectés et leur position respective ou les informations de secours vers un dispositif récepteur qui est positionné à l'extérieur du système de navigation (1), le dispositif émetteur étant conçu en particulier sous la forme d'un dispositif émetteur d'un système de communication "car-to"X".

12. Système de navigation selon l'une des revendications 1 à 11, comprenant en outre un dispositif récepteur (15) adapté pour recevoir des éléments liés à la sécurité provenant de l'extérieur et leur position respective ou informations de secours externes respectives provenant d'un dispositif émetteur qui est positionné à l'extérieur du système de navigation (1), dans lequel l'unité fournissant des informations est adaptée pour compléter ou mettre à jour les éléments liés à la sécurité détectés et leur position respective ou informations de secours respectives à fournir à l'utilisateur avec les éléments liés à la sécurité reçus provenant de l'extérieur et leur position respective ou informations de secours externes respectives, le dispositif récepteur étant conçu en particulier sous la forme d'un dispositif récepteur d'un système de communication "car-to"X".

13. Système de navigation selon l'une des revendications 1 à 12, comprenant en outre
- un dispositif de stockage de données de carte (2, 3) qui est adapté pour fournir des données de carte comprenant une pluralité de liens (Link), dans lequel un lien respectif (Link 1) relie des noeuds (ND1, ND2) à ses deux extrémités,
- dans lequel au moins l'un des liens (Link 1) est complété avec au moins une coordonnée géographique ayant une information de secours attribuée basée sur l'un de ses éléments liés à la sécurité détectés (21 - 24) et sur sa position allouée.

14. Véhicule (80) comprenant un système de navigation (1) selon l'une des revendications précédentes.

15. Procédé de fourniture d'informations de secours dans un système de navigation, comprenant les étapes suivantes :
- se déplacer dans un tunnel (52), et simultanément
- capturer des images d'un environnement réel du tunnel à l'aide d'au moins une caméra (16),
- analyser une image respective parmi lesdites images et détecter des éléments liés à la sécurité (21 - 24) inclus dans les images, qui indiquent toute installation ou équipement lié(e) à la sécurité d'un tunnel,
- calculer et surveiller une position tout en se déplaçant dans le tunnel et allouer les éléments liés à la sécurité détectés (21 - 24) à une position surveillée correspondante respective,
- recevoir des données de carte (60) et associer les éléments liés à la sécurité détectés (21 - 24) aux données de carte,
- fournir des informations de secours (31 - 33) informant sur les circonstances courantes à l'intérieur du tunnel, destinées à être fournies à un utilisateur en se basant sur les éléments liés à la sécurité détectés et sur les données de carte.
